# EUROPÄISCHE PATENTANMELDUNG

(11) **EP 1 281 945 A1**
(43) Veröffentlichungstag der Anmeldung: **05.02.2003**
(21) Anmeldenummer: 02017120.3
(22) Anmeldetag: 30.07.2002
(51) Int. Cl.: G01K 11/06

(54) **Anzeigevorrichtung**

(30) Priorität: 02.08.2001 DE 20112862 U
(71) Anmelder: Schang Michael, 73566 Bartholomae (DE)
(72) Erfinder: Schang Michael, 73566 Bartholomae (DE)

(57) **Zusammenfassung**

Eine Vorrichtung zur irreversiblen Anzeige des Überschreitens einer bestimmten, vorgegebenen Temperatur eines Produktes weist eine an dem Produkt anbringbare Umhüllung zur Aufnahme eines Anzeigemittels auf. Das Anzeigemittel ist durch wenigstens zwei sich in der Umhüllung befindliche Substanzen gebildet, welche jeweils bei wenigstens annähernd der vorgegebenen Temperatur ihren Aggregatzustand zwischen fest und flüssig ändern. Diese wenigstens zwei Substanzen weisen jeweils unterschiedliche Färbungen auf, welche sich im flüssigen Zustand der Substanzen miteinander vermischen.

## Beschreibung

Die Erfindung betrifft eine Vorrichtung zur irreversiblen Anzeige des Überschreitens einer bestimmten, vorgegebenen Temperatur eines Produktes, mit einer an dem Produkt anbringbaren Umhüllung zur Aufnahme eines Anzeigemittels.

Aus der DE 42 10 739 A1 ist eine gattungsgemäße Vorrichtung bekannt. Eine ähnliche Vorrichtung beschreibt auch die DE 196 22 671 A1. Nachteiligerweise sind diese Vorrichtungen jedoch sehr kompliziert in ihrer Funktionsweise und aufgrund der verwendeten magnetisierbaren Elemente auch recht teuer.

Weitere derartige Anzeigevorrichtungen beschreiben die DE 195 11 290 A1, die JP 03224435A, die JP 52020885A, die JP 52020886A und die JP 52020887A, wobei aus allen genannten Dokumenten jedoch keine in allen Belangen zufriedenstellende Lösung zu entnehmen ist.

Für solche Anzeigevorrichtungen besteht auf dem Markt jedoch ein großes Bedürfnis, da die mögliche Unterbrechung von Kühlketten ein sehr großes Risiko für den Endverbraucher darstellt, das bislang nicht mit vernünftigen Mitteln kalkuliert werden kann.

Es ist daher Aufgabe der vorliegenden Erfindung, eine Vorrichtung zur irreversiblen Anzeige des Überschreitens einer bestimmten, vorgegebenen Temperatur eines Produktes zu schaffen, die sowohl einfach und preisgünstig als auch in der Lage ist, das Überschreiten einer bestimmten Temperatur zuverlässig und dauerhaft anzuzeigen.

Erfindungsgemäß wird diese Aufgabe durch die in Anspruch 1 genannten Merkmale gelöst.

Durch die erfindungsgemäßen wenigstens zwei Substanzen in der Umhüllung, die verschiedene Färbungen aufweisen, ist bei Überschreiten einer bestimmten, vorgegebenen Temperatur ein Vermischen gegeben, so daß dieses Überschreiten irreversibel und damit dauerhaft angezeigt wird. Dies bedeutet, daß auch im Falle eines erneuten Unterschreitens der betreffenden Temperatur die einmalige Überschreitung, die ja bereits zu einer Beschädigung des Produktes geführt haben kann, angezeigt bleibt.

Dies ergibt eine gleichermaßen zuverlässige wie preisgünstige Anzeigevorrichtung, die an allen Arten von bei einer bestimmten Temperatur aufzubewahrenden Produkten angebracht werden kann.

Ein besonders breiter Einsatzbereich der erfindungsgemäßen Anzeigevorrichtung ergibt sich, wenn in einer besonders vorteilhaften Ausgestaltung die vorgegebene Temperatur in einem Bereich zwischen -5°C und 0°C liegt. Hierdurch können alle tiefgefrorenen Produkte in einfacher Weise gesichert werden.

Weitere mögliche Ausgestaltungen und Vorteile der Erfindung können aus den übrigen Unteransprüchen entnommen werden. Anhand der Zeichnung ist nachfolgend ein Ausführungsbeispiel der Erfindung prinzipmäßig dargestellt.

Fig. 1 zeigt einen Schnitt durch eine erfindungsgemäße Vorrichtung zur irreversiblen Anzeige des Überschreitens einer bestimmten, vorgegebenen Temperatur eines Produktes.

Fig. 2 zeigt eine leicht abgeänderte Ausführung der Vorrichtung aus Fig. 1.

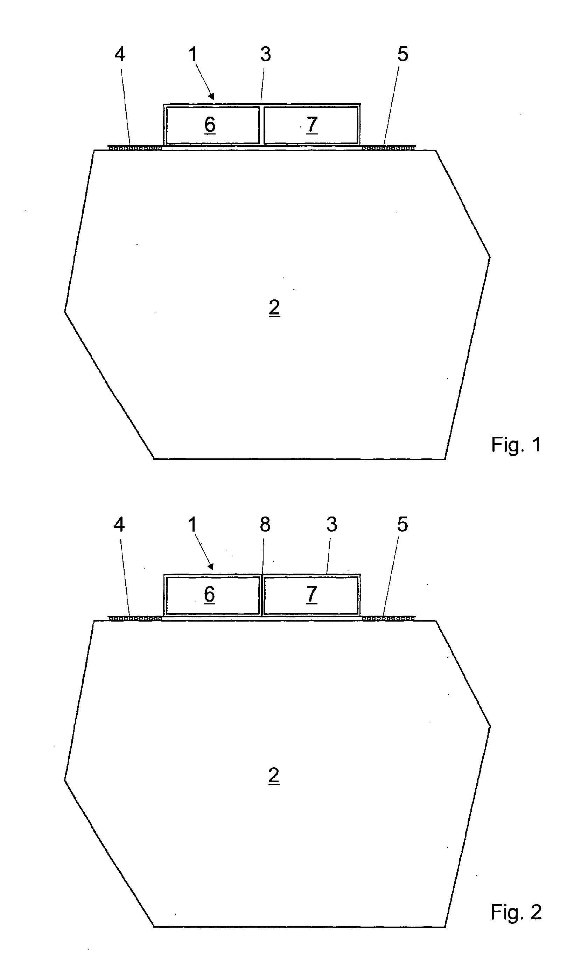

Fig. 1 zeigt eine Anzeigevorrichtung 1, die an einem Produkt 2, vorzugsweise einem Lebensmittel, angebracht ist. Die Anzeigevorrichtung 1 weist eine Umhüllung 3 auf, an der ein Klebestreifen 4 mit einem Klebemittel 5 angebracht ist. Somit ist die Anzeigevorrichtung 1 in der Art eines Pflasters ausgebildet, wodurch sie sehr einfach gehandhabt werden kann.

In der beispielsweise aus einer durchsichtigen Kunststoffolie bestehenden Umhüllung 3 befinden sich zwei unterschiedlich gefärbte Substanzen, nämlich eine erste Substanz 6 und eine zweite Substanz 7. Zur Färbung der Substanzen 6 und 7 kann z.B. ein beliebiger Farbstoff oder ähnliches verwendet werden. Die Substanzen 6 und 7, die vorzugsweise zu ihrem überwiegenden Teil aus Wasser bestehen und damit sehr preisgünstig hergestellt werden können, sind so ausgelegt, daß sie bei einer bestimmten Temperatur ihren Aggregatzustand von fest in flüssig und umgekehrt ändern. Die Substanzen 6 und 7 werden im festen bzw. gefrorenen Zustand, also beispielsweise als Eiswürfel, in die Umhüllung 3 eingegeben, worauf die Umhüllung 3 an dem Produkt 2 angebracht wird. Wenn sich nun die Temperatur des Produktes 2 zu einem beliebigen Zeitpunkt über die Schmelztemperatur der Substanzen 6 und 7, also über eine vorgegebene Temperatur, erhöht, so schmelzen diese und vermischen sich miteinander. Auf diese Weise schaffen die Substanzen 6 und 7 ein Anzeigemittel zur irreversiblen Anzeige des Überschreitens einer bestimmten, vorgegebenen Temperatur des Produktes 2. Auch im Falle eines erneuten Unterschreitens dieser Temperatur bleibt dies angezeigt.

Beispielsweise kann die erste Substanz 6 rot, die zweite Substanz 7 dagegen gelb ausgeführt sein, so daß sich bei Überschreiten der vorbestimmten Temperatur eine orange Färbung in der Umhüllung 3 ergibt. Selbstverständlich sind auch vollkommen andere Farbkombinationen möglich und es ist nicht erforderlich, zwei Grundfarben zu verwenden, die beim Vermischen eine dritte, homogene Farbe ergeben. Vielmehr wird auch in einfacher Weise erkannt, wenn sich die beiden Substanzen 6 und 7 in irgendeiner Weise miteinander vermischt haben.

Der Schmelzpunkt der Substanzen 6 und 7 liegt vorzugsweise in einem Bereich zwischen -5°C und 0°C, da dies beim Einfrieren der meisten Produkte 2 sinnvoll ist. Allerdings kann man sich auch Produkte 2 vorstellen, die nicht über 10°C oder 20°C oder einer beliebigen anderen Temperatur erhitzt werden sollten, beispielsweise wertvolle Zigarren oder Weine. In einem solchen Fall müssten lediglich die Zusätze zu der Wasserbasis der beiden Substanzen 6 und 7 entsprechend ausgewählt werden, z.B. in Form von Chemikalien oder Ölen, die den Schmelzpunkt der Substanzen 6 und 7 ändern.

Das Klebemittel 5 kann so ausgeführt sein, daß beim Entfernen der Umhüllung 3 von dem Produkt 2 ein Klebemittel 5 an dem Produkt 2 verbleibt. Hierdurch wird verhindert, daß nach dem Schmelzen der Substanzen 6 und 7 die Anzeigevorrichtung 1 lediglich abgerissen werden kann. Des weiteren kann die Umhüllung 3 lediglich ein Sichtfenster aufweisen und nicht vollständig aus Kunststoffolie bestehen. Selbstverständlich ist auch ein Aufkleben der Umhüllung 3 lediglich mit dem Klebemittel 5 und ohne den Klebestreifen 4 denkbar.

Die Gefrierpunkte der beiden Substanzen 6 und 7 können auch durch die Zugabe von Alkohol geändert bzw. eingestellt werden. Damit ist eine Anzeige auch dann möglich, wenn das Produkt 2 eine Temperatur von weniger als 0°C überschritten hat, was bei besonders empfindlichen Lebensmitteln sinnvoll sein kann.

In Fig. 2 ist eine alternative bzw. leicht abgeänderte Ausführungsform der Anzeigevorrichtung 1 dargestellt, bei der sich zwischen den beiden Substanzen 6 und 7 ein Trennelement 8 befindet, welches in dieser Ausführung in Form eines dünnen Häutchens ausgebildet ist, das beispielsweise aus Kunststoff bestehen kann. Dadurch können bei der Herstellung der Anzeigevorrichtung 1 die beiden Substanzen 6 und 7 statt in fester auch in flüssiger Form in die Umhüllung 3 gegeben werden, ohne sich vor der eigentlichen Anwendung zu vermischen. Wird anschließend das Produkt 2, beispielsweise durch den Einsatz von flüssigem Stickstoff oder dergleichen, tiefgefroren, so gefrieren selbstverständlich auch die beiden Substanzen 6 und 7, vergrößern dabei ihr Volumen und zerstören damit das Trennelement 8. Die Funktionalität bezüglich der Anzeige eines eventuellen Auftauens des Produktes 2 stimmt dann mit der oben beschriebenen überein.

## Patentansprüche

1. Vorrichtung zur irreversiblen Anzeige des Überschreitens einer bestimmten, vorgegebenen Temperatur eines Produktes (2), mit einer an dem Produkt (2) anbringbaren Umhüllung (3) zur Aufnahme eines Anzeigemittels, **dadurch gekennzeichnet, dass** das Anzeigemittel durch wenigstens zwei sich in der Umhüllung (3) befindliche Substanzen (6,7) gebildet ist, welche jeweils bei wenigstens annähernd der vorgegebenen Temperatur ihren Aggregatzustand zwischen fest und flüssig ändern, und daß diese wenigstens zwei Substanzen (6,7) jeweils unterschiedliche Färbungen aufweisen, welche sich im flüssigen Zustand der Substanzen (6,7) miteinander vermischen.

2. Vorrichtung nach Anspruch 1, **dadurch gekennzeichnet, dass** die vorgegebene Temperatur in einem Bereich zwischen -5°C und 0°C liegt.

3. Vorrichtung nach Anspruch 1 oder 2, **dadurch gekennzeichnet, dass** die Substanzen (6,7) im festen Zustand in die Umhüllung (3) eingebracht sind.

4. Vorrichtung nach einem der Ansprüche 1 bis 3, **dadurch gekennzeichnet, dass** die Substanzen (6,7) zu ihrem wenigstens überwiegenden Teil aus Wasser bestehen, in welches Farbstoffe eingebracht sind.

5. Vorrichtung nach einem der Ansprüche 1 bis 4, **dadurch gekennzeichnet, dass** die Umhüllung (3) mittels eines Klebemittels (5) an dem Produkt (2) anbringbar ist.

6. Vorrichtung nach Anspruch 5, **dadurch gekennzeichnet, dass** die Umhüllung (3) mit einem Klebestreifen (4) versehen ist, der das Klebemittel (5) aufweist.

7. Vorrichtung nach Anspruch 5 oder 6, **dadurch gekennzeichnet, dass** das Klebemittel derart ausgeführt ist, dass beim Entfernen der Umhüllung (3) von dem Produkt (2) ein Klebemittel (5) an dem Produkt (2) verbleibt.

8. Vorrichtung nach einem der Ansprüche 1 bis 7, **dadurch gekennzeichnet, dass** die Umhüllung (3) aus durchsichtiger Kunststoffolie besteht.

9. Vorrichtung nach einem der Ansprüche 1 bis 8, **dadurch gekennzeich**n e t, dass sich zwischen den beiden Substanzen (6,7) ein Trennelement (8) befindet.

10. Produkt, insbesondere Lebensmittel, an welchem eine Vorrichtung nach einem der Ansprüche 1 bis 9 angebracht ist.
